# EUROPÄISCHE PATENTSCHRIFT

(11) **EP 1 059 477 B1**
(45) Veröffentlichungstag und Bekanntmachung des Hinweises auf die Patenterteilung: **19.07.2006**
(21) Anmeldenummer: 00110100.5
(22) Anmeldetag: 13.05.2000
(51) Int. Cl.: F16L 3/227, H02G 3/32, H01R 4/48

(54) **Kabelklemme**
Cable clamp
Bride pour câble

(30) Priorität: 09.06.1999 DE 19926332
(43) Veröffentlichungstag der Anmeldung: 13.12.2000
(73) Patentinhaber: ADC GMBH, 14167 Berlin (DE)
(72) Erfinder: Nad, Ferenc, 14197 Berlin (DE)

(56) Entgegenhaltungen:
- DE-C- 19 811 476
- FR-A- 2 058 620

## Beschreibung

Die Erfindung bezieht sich auf eine Kabelklemme zur Lagesicherung von Kabeln in Bauteilen der Telekommunikations- und Datentechnik, aus einem Mittelteil zur Anlage am Kabel und zwei bogenförmigen Federenden zum Einrasten in parallel zueinander ausgerichtete verzahnte Wände des Bauteiles.

In der FR-A-2058620 ist eine Vorrichtung zur ultraschnellen Verbindung an einer Erdungsumflechtung oder einem zentralen Leiter in Koaxialkabeln offenbart, wobei die Vorrichtung aus einem elastischen leitenden Teil ausgebildet ist, welches entweder Vorsprünge oder Lamellen aufweist und mittels einer Schnappverbindung um das Kabel herum montiert wird, wobei es zur Gewährleistung des notwendigen Kontakts das Eindringen der Vorsprünge oder der Lamellen in die Umflechtung oder den zentralen Leiter bewirkt. Dabei ist unter anderem ein Endlaschen aufweisender selbstklemmender Clip aus gehärtetem Stahlblech offenbart, welcher als Kabelklemme fungiert und quer zum Kabel einen dreifach gewellten Abschnitt aufweist. Der selbstklemmende Clip ähnelt in seiner äußeren Form dabei einem stilisierten "w". Dabei sind die Endlaschen der Kabelklemme zum Einrasten in dafür vorgesehene Schlitze in vertikalen seitlichen Wandungen eines Sockels mit u-förmigem Querschnitt vorgesehen. Aufgrund der spitzen Winkelstellung der seitlichen Schenkel des w-förmigen selbstklemmenden Clips wirkt dessen Federkraft jedoch in erster Linie senkrecht auf die vertikalen Wandungen des Sockels, und weniger auf das festzuklemmende Kabel.

Eine Kabelklemme der gattungsgemäßen Art ist aus der DE 40 09 297 C2 zur Befestigung von Kabeln bekannt. Diese werden einzeln oder paarweise zwischen die parallel zueinander ausgerichteten, verzahnten Wände des Bauteiles eingebracht und anschließend durch die Kabelklemme lagegesichert. Diese rastet mit ihren bogenförmigen Federenden in die Verzahnungen der parallelen Wände des Bauteiles ein. Diese, an sich eine sehr dauerhafte Lagesicherung von Kabeln gewährleistende Kabelklemme kann jedoch dann ihre Funktion für die Kabel verlieren, wenn diese in sich nicht starr sind, sondern im Laufe der Zeit dem Federdruck der Kabelklemme nachgeben. Dies zeigt sich insbesondere bei abisolierten, mehradrigen, mit einem Drahtgeflecht oder einer Folie versehenen geschirmten Kabeln, bei denen die Adern einzeln, in Gruppen oder insgesamt mit Schirmgeflecht oder Schirmfolie versehen sind. Wenn bei derartigen mehradrigen Kabeln die äußere Isolierung entfernt ist und die Kabelklemme als Schirmclip dienen soll, besteht die Gefahr, daß bei einem Nachlassen der Federkraft der Kabelklemme die notwendige Kontaktkraft nicht mehr vorhanden ist, so daß die Schirmsicherung nicht mehr ordnungsgemäß gewährleistet ist.

Der Erfindung liegt von daher die Aufgabe zugrunde, die Kabelklemme der gattungsgemäßen Art im Hinblick auf eine Dauerhaftigkeit der Federkraft auf das festzuklemmende Kabel zu verbessern.

Zur Lösung dieser Aufgabe sieht die Erfindung vor, daß die Kabelklemme aus einem mittleren Andrückelement und zwei seitlich anschließenden, bogenförmigen Federelementen gebildet ist, wobei die bogenförmigen Federelemente als S-förmige Doppelbögen ausgebildet sind und die Doppelbögen aus haarnadelförmigen, mit den Scheiteln gegeneinander gerichteten Federteilen gebildet sind.

Die bogenförmigen Federelemente üben eine dauerhafte Federkraft aus und gewährleisten eine ordnungsgemäße Schirmsicherung. Ferner läßt sich die Kontakt- bzw. Federkraft für unterschiedliche Kabeldurchmesser und Kabelarten, je nach Steifigkeit und Aufbau, stufen weise einstellen, indem die bogenförmigen Federelemente in den Seitenwandverzahnungen symmetrisch oder asymmetrich tiefergedrückt werden, bis die ausreichende mechanischfedernde Vorfixierung gewährleistet ist. Die Oberfläche der die Schirmung weiterleitenden metallischen Kabelklemme kontaktiert dabei die Kabelschirmung ständig und verbessert dadurch die Weiterleitung des Schirmpotentials. Somit hat die erfindungsgemäße Kabelklemme mittels der bogenförmigen Federelemente als Federspeicher eine zusätzliche Federfunktion, um die Schirmung der Kabeladern zu kontaktieren und zu halten, selbst wenn sich die Kabeladern und deren Schirmung im Laufe der Zeit zusammendrücken lassen.

Die als S-förmige Doppelbögen ausgebildeten bogenförmigen Federelemente bilden einen Federspeicher bzw. ein zusätzliches Federelement.

Das Andrückelement weist vorzugsweise zwei Wellenbögen zur Aufnahme zweier paralleler Kabel auf. Die freien Enden der Doppelbögen sind vorzugsweise mit Eingriffsöffnungen versehen, um mittels einfacher Werkzeuge (Schraubendreher) oder eines Universalwerkzeuges die Kabelklemme problemlos durch Aushebeln zu entfernen.

Die Erfindung ist nachfolgend anhand eines in den Zeichnungen dargestellten Ausführungsbeispieles einer Kabelklemme näher erläutert. Es zeigen:
- Fig. 1: die perspektivische Draufsicht auf ein inneres Bauteil einer geschirmten Anschlußdose mit zwei Kabeln und einer Kabelklemme,
- Fig. 2: die Kabelklemme in perspektivischer Darstellung,
- Fig. 3: die Draufsicht auf die Kabelklemme,
- Fig. 4: eine Ansicht des Bauteiles nach Fig. 1 mit eingelegten, abisolierten Kabeladern, und
- Fig. 5: die Darstellung nach Fig. 4 mit durch die Kabelklemme lagegesicherten Kabeln.

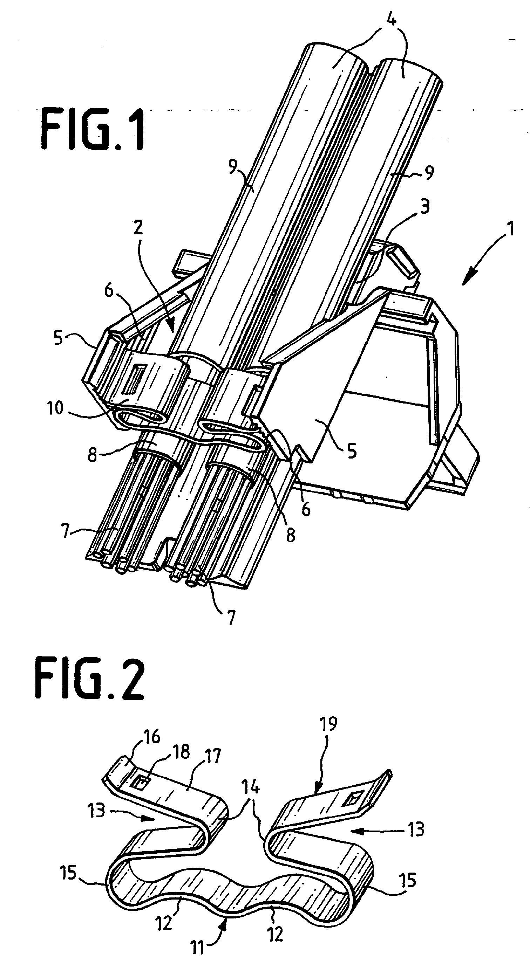

Das in Fig.1, 4 und 5 dargestellte metallische Bauteil 1 einer geschirmten Anschlußdose der Telekommunikations- und Datentechnik für hohe Übertragungsraten, d.h. hohe Übertragungsfrequenzen,umfaßt eine Aufnahme 2 mit zwei Mulden 3 für parallele Kabel 4 und zwei parallelen Wänden 5, die auf ihren Innenseiten gegeneinandergerichtete, parallele Verzahnungen 6 aufweisen. Die Kabel 4 sind am freien Ende abisoliert,so daß die einzelnen Kabeladern 7 sichtbar sind. Die Kabeladern 7 sind von einem Schirmgeflecht 8 umgeben, das sich nach dem Entfernen der Isolierhülle 9 im Bereich zwischen den verzahnten Wänden 5 befindet, zwischen denen eine metallische Kabelklemme 10 aus Zinkdruckguß zur Lagesicherung der Kabel 4 im Bauteil 1 eingebracht ist.

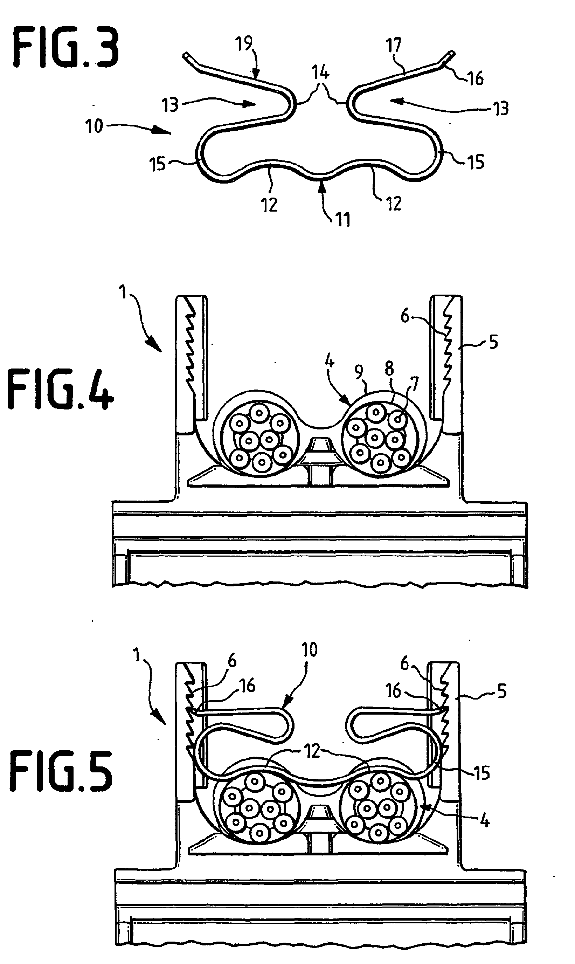

Die aus metallischem, federnden Bandmaterial gebildete Kabelklemme 10 weist ein mittleres Andrückelement 11 mit zwei Wellenbögen 12 zur Aufnahme der parallelen Kabel 4 auf. An die Wellenbögen 12 des Mittelteils 11 schließen sich beidseits bogenförmige Federelemente 19 in Form von S-förmigen Doppelbögen 13 an,die aus haarnadelförmigen, mit den Scheiteln 14 gegeneinandergerichteten Federteilen gebildet sind. Diese Form der Kabelklemme 10 ist am besten aus der perspektivischen Darstellung in Fig. 2 und der Draufsicht in Fig. 3 ersichtlich. Zwischen den beiden Wellenbögen 12 des Mittelteiles 11 und den anschließenden S-förmigen Doppelbögen 13 der bogenförmigen Federelemente 19 befindet sich ein sich über mehr als 180° erstreckender Verbindungsbogen 15. Die freien Enden 16 der Doppelbögen 13 sind gegenüber dem im wesentlichen flachen Endbereich 17 leicht abgewinkelt und weisen unmittelbar daran anschließend Eingriffsöffnungen 18 auf, die zum Eingriff einfacher Werkzeuge, wie Schraubendreher, oder eines Universalwerkzeuges dienen.

Die Kabelklemme 10 wird nach dem Einlegen der abisolierten Kabel 4 in die Mulden 3 des Bauteiles 1 gemäß Fig. 4 zwischen die parallelen,verzahnten Wände 5 eingerastet, wie es Fig. 5 zeigt, derart, daß die beiden S-förmigen Doppelbögen 13 gegenüber dem Andrückelement 11 mit den beiden Wellenbögen 12 einen Federspeicher bilden, der einen ständigen Andruck der Schirmung 8 der beiden Kabel 4 gegen die metallischen Mulden 3 des Bauteiles 1 bewirkt. Dadurch wird langfristig die notwendige Kontaktkraft aufrechterhalten, um die Schirmung 8 über die Kabelklemme 10 ständig auf das metallische Bauteil 1 einer geschirmten Anschlußdose weiterzuleiten.

### BEZUGSZEICHENLISTE

- 1: Bauteil
- 2: Aufnahme
- 3: Mulde
- 4: Kabel
- 5: Wand
- 6: Verzahnung
- 7: Kabelader
- 8: Schirmgeflecht
- 9: Isolierhülle
- 10: Kabelklemme
- 11: Andrückelement
- 12: Wellenbogen
- 13: Doppelbogen
- 14: Scheitel
- 15: Verbindungsbogen
- 16: Ende
- 17: Endbereich
- 18: Eingriffsöffnung
- 19: Federelement

## Patentansprüche

1. Kabelklemme zur Lagesicherung von Kabeln in Bauteilen der Telekommunikations- und Datentechnik, aus einem Mittelteil zur Anlage am Kabel und zwei Federenden zum Einrasten in parallel zueinander ausgerichtete, verzahnte Wände des Bauteils, wobei die Kabelklemme (10) aus einem mittleren Andrückelement (11) und zwei seitlich anschließenden, bogenförmigen Federelementen (19) gebildet ist,
**dadurch gekennzeichnet, dass**
die bogenförmigen Federelemente (19) als S-förmige Doppelbögen (13) ausgebildet sind, wobei die Doppelbögen (13) als haarnadelförmige, mit den Scheiteln (14) gegeneinander gerichtete Federteile ausgebildet sind.

2. Kabelklemme nach Anspruch 1, **dadurch gekennzeichnet, daß** das Andrückelement (11) zwei Wellenbögen (12) zur Aufnahme zweier paralleler Kabel (4) aufweist.

3. Kabelklemme nach Anspruch 1 oder 2, **dadurch gekennzeichnet, daß** die freien Enden (16) der Doppelbögen (13) mit Eingriffsöffnungen (18) für ein Werkzeug versehen sind.

## Claims

1. Cable clamp for securing the position of cables in components used in telecommunications and data technology, comprising a central part for bearing against the cable and two spring ends for latching into toothed walls of the component which are oriented parallel to one another, with the cable clamp (10) being formed from a central pressure element (11) and two bow-like spring elements (19) which adjoin the sides of the said pressure element,
**characterized in that**
the bow-like spring elements (19) are in the form of S-shaped double bows (13) which are in the form of hairpin-like spring parts whose apexes (14) are directed towards one another.

2. Cable clamp according to Claim 1, **characterized in that** the pressure element (11) has two undulating bows (12) for holding two parallel cables (4).

3. Cable clamp according to Claim 1 or 2,
**characterized in that** the free ends (16) of the double bows (13) are provided with engagement openings (18) for a tool.

## Revendications

1. Bride pour câble pour fixer la position de câbles dans des composants de la technique des télécommunications et de la transmission de données, composée d'une partie centrale à appliquer sur le câble et deux extrémités élastiques à encliqueter dans des parois dentées du composant, orientées parallèlement l'une à l'autre, dans laquelle la bride pour câble (10) est formée à partir d'un élément de pression central (11) et de deux éléments élastiques en forme d'arc (19) se raccordant latéralement, **caractérisée en ce que** les éléments élastiques en forme d'arc (19) sont formés par des arcs doubles en forme de S (13), les arcs doubles (13) étant formés par des pièces élastiques en forme d'épingle à cheveux, avec les sommets (14) orientés l'un vers l'autre.

2. Bride pour câble selon la revendication 1,
**caractérisée ce que** l'élément de pression (11) comprend deux arcs ondulés (12) destinés à recevoir deux câbles parallèles (4).

3. Bride pour câble selon la revendication 1 ou 2, **caractérisée en ce que** les extrémités libres (16) des arcs doubles (13) sont pourvues d'ouvertures de prise (18) pour un outil.
